# EUROPÄISCHE PATENTSCHRIFT

(11) **EP 4 474 192 B1**
(45) Veröffentlichungstag und Bekanntmachung des Hinweises auf die Patenterteilung: **04.03.2026**
(21) Anmeldenummer: 24174430.9
(22) Anmeldetag: 07.05.2024
(51) Int. Cl.: B60K 31/00, B60K 35/10, B60K 35/233, B60K 35/23, B60K 35/28, B60W 30/16, B60W 50/08, B60W 50/14, G02B 27/01, G08G 1/16

(54) **VERFAHREN FÜR EINE AUTOMATISIERTE FAHRZEUGLÄNGSREGELUNG UND ENTSPRECHEND EINGERICHTETES ASSISTENZSYSTEM UND KRAFTFAHRZEUG**
METHOD FOR AN AUTOMATED LONGITUDINAL CONTROL OF A VEHICLE, AND CORRESPONDINGLY EQUIPPED ASSISTANCE SYSTEM AND MOTOR VEHICLE
PROCÉDÉ DE RÉGULATION LONGITUDINALE AUTOMATISÉE D'UN VÉHICULE ET SYSTÈME D'ASSISTANCE CONÇU EN CORRESPONDANCE ET VÉHICULE AUTOMOBILE

(30) Priorität: 05.06.2023 DE 102023205240
(43) Veröffentlichungstag der Anmeldung: 11.12.2024
(73) Patentinhaber: VOLKSWAGEN AG, 38440 Wolfsburg (DE)
(72) Erfinder: Kunze, Dr. Alexander, 38106 Braunschweig (DE); Sandbrink, Dr. Johanna, 38102 Braunschweig (DE); Tebaibi, Yannis, 38106 Braunschweig (DE); Sadovitch, Dr. Vitalij, 38102 Braunschweig (DE)

(56) Entgegenhaltungen:
- DE-A1- 102010 052 293
- US-A1- 2023 036 783

## Beschreibung

Die vorliegende Erfindung liegt auf dem Gebiet der Fahrzeugtechnik und betrifft ein Verfahren für eine automatisierte Längsregelung eines Kraftfahrzeugs. Die Erfindung betrifft weiter ein für ein solches Verfahren eingerichtetes Assistenzsystem und ein damit ausgestattetes Kraftfahrzeug.

Es gibt heutzutage in Kraftfahrzeugen bereits eine Vielzahl verschiedener Assistenzfunktionen, die unterschiedlichste Aufgaben erfüllen sollen, wie beispielsweise den Fahrer zu informieren oder beim Führen des jeweiligen Fahrzeugs zu unterstützen oder das jeweilige Fahrzeug zumindest teilautomatisiert zu führen. Dabei ist jedoch die Aktivität solcher Assistenzfunktionen für den Fahrer bzw. einen Fahrzeuginsassen nicht immer ohne weiteres nachvollziehbar oder zumindest nicht immer einfach und ablenkungsarm erkennbar bzw. überwachbar. Dies kann das Vertrauen in entsprechende Assistenzfunktionen beeinträchtigen, zu falschen Annahmen des Fahrers bezüglich der Aktivität oder des Zustands von Assistenzfunktionen führen und/oder den Fahrer unnötig kognitiv belasten bzw. vom umgebenden Verkehrsgeschehen ablenken. Dementsprechend gibt es also Bedarf für eine verbesserte Vermittlung der Aktivität von Assistenzfunktionen an den Fahrer bzw. die Fahrzeuginsassen.

Beispielsweise beschreibt die DE 10 2013 016 242 A1 ein Verfahren und eine Vorrichtung zur Unterstützung eines Fahrassistenzsystems durch augmentierte Darstellung einer Zusatzinformation in einem Bild einer vorausliegenden Fahrzeugumgebung. Dabei bildet das Bild einen Hintergrund einer Anzeige und es werden Fahrzeuge im Hintergrund mit einer zugehörigen Zusatzinformation optisch gekennzeichnet. Als Zusatzinformation wird ein die vorausliegende Fahrsituation repräsentierender Warnhinweis und/oder ein einen erforderlichen Fahrzeugsteuereingriff repräsentierender Steuerhinweis ausgegeben.

Die DE 10 2020 2014 843 A1 offenbart ein Verfahren zur Darstellung eines virtuellen Elements in einem Anzeigebereich einer Anzeigeneinrichtung eines Fahrzeugs. Dabei wird in dem Anzeigebereich ein dreidimensionaler Raum dargestellt und es werden auf Basis einer Datenquelle dreidimensionale Koordinaten im dargestellten dreidimensionalen Raum für die Verortung des virtuellen Elements bestimmt. Das virtuelle Element wird als zweidimensionale Abbildung in den dargestellten dreidimensionalen Raum transformiert. Dabei wird durch das virtuelle Element ein im Anzeigebereich dargestelltes erstes Fahrzeug markiert, wenn ein vordefinierter Geschwindigkeitsgradient zwischen dem Fahrzeug und dem ersten Fahrzeug überschritten oder unterschritten wird.

Die DE 10 2010 052 193 A1 beschreibt ein Verfahren zur Einstellung eines Fahrerassistenzsystems, das aus mehreren Modulen mit unterschiedlichen Teilfunktionen besteht. Die Einstellung erfolgt über ein grafisches Anzeigeelement, das je nach aktivierter Funktionsgruppe unterschiedliche Darstellungen zeigt.

Die US 2023/0036783 A1 beschreibt eine Anzeige-Steuervorrichtung eines Fahrzeugs, die einen Speicher und einen mit dem Speicher gekoppelten Prozessor umfasst, um ein vorbestimmtes Bild in einem Anzeigebereich darzustellen, der die Sicht vor dem Fahrzeug zeigt. Der Prozessor ist dabei so konfiguriert, dass er den Fahrzustand des Fahrzeugs erfasst.

Aufgabe der vorliegenden Erfindung ist es, eine automatisierte Längsregelung eines Fahrzeugs mit für einen Fahrzeuginsassen besonders einfach und ablenkungsarm überwachter Funktionen zu ermöglichen.

Diese Aufgabe wird durch die Gegenstände der unabhängigen Ansprüche gelöst. Weitere mögliche Ausgestaltungen der Erfindung sind in den Unteransprüchen, der Beschreibung und den Figuren offenbart. Merkmale, Vorteile und mögliche Ausgestaltungen, die im Rahmen der Beschreibung für einen der Gegenstände der unabhängigen Ansprüche dargelegt sind, sind zumindest analog als Merkmale, Vorteile und mögliche Ausgestaltungen des jeweiligen Gegenstands der anderen unabhängigen Ansprüche sowie jeder möglichen Kombination der Gegenstände der unabhängigen Ansprüche, gegebenenfalls in Verbindung mit einem oder mehr der Unteransprüche, anzusehen.

Das erfindungsgemäße Verfahren kann angewendet werden für eine automatisierte Längsregelung bzw. im Rahmen oder als Teil oder zur Unterstützung einer automatisierten Längsregelung eines Kraftfahrzeugs. Eine solche automatisierte Längsregelung kann beispielsweise durch einen Abstandsregeltempomaten bzw. einer Einrichtung zur adaptiven Geschwindigkeitsregelung (ACC) durchgeführt werden. In einem Verfahrensschritt des erfindungsgemäßen Verfahrens wird in dem Kraftfahrzeug fortlaufend eine Position eines diesem in Fahrtrichtung vorausfahrenden Vorderfahrzeugs relativ zu dem Kraftfahrzeug erfasst bzw. ermittelt. Diese Position des Vorderfahrzeugs wird hier auch als Vorderfahrzeugposition bezeichnet. Die Vorderfahrzeugposition kann beispielsweise mittels einer Umgebungssensorik des Kraftfahrzeugs, also etwa mittels einer Kamera und/oder einer Radareinrichtung und/oder dergleichen mehr bzw. anhand von Sensor- bzw. Umgebungsdaten einer solchen Umgebungssensorik ermittelt werden. Ebenso kann das Ermitteln hier beispielsweise bedeuten, dass die Vorderfahrzeugposition, beispielsweise über eine entsprechende Schnittstelle oder aus einem entsprechenden Datenspeicher, empfangen oder abgerufen wird, beispielsweise durch ein für das erfindungsgemäße Verfahren eingerichtetes Assistenzsystem. Dies kann laufend bzw. regelmäßig wiederholt durchgeführt werden. In den nachfolgenden Verfahrensschritten kann dann also jeweils die aktuelle, also beispielsweise die zuletzt ermittelte bzw. die neueste verfügbare Vorderfahrzeugposition verwendet werden. Das Vorderfahrzeug kann hier insbesondere das jeweils dem Kraftfahrzeug unmittelbar, also ohne dass sich zwischen dem Kraftfahrzeug und dem Vorderfahrzeug noch ein weiteres Fahrzeug befindet, vorausfahrende Fahrzeug sein.

In einem weiteren Verfahrensschritt des erfindungsgemäßen Verfahrens wird - beispielsweise ebenfalls durch das Assistenzsystem - ausgehend von der ermittelten Vorderfahrzeugposition eine Anzeigeposition für eine zu dem Vorderfahrzeug, insbesondere auch zur Fahrbahnoberfläche, kontaktanaloge Lückenmarkierung bestimmt. Die Anzeigeposition wird dabei korrespondierend zu einer jeweils aktuell als Regelziel für die Längsregelung eingestellten Lücke zu dem Vorderfahrzeug bestimmt. Eine solche Lücke kann im vorliegenden Sinne insbesondere eine Zeitlücke oder eine Weglücke sein. Weiter wird dann ein Head-up-Display (HUD) des Kraftfahrzeugs zum bezogen auf das Vorderfahrzeug, insbesondere auch bezogen auf die Fahrbahnoberfläche, kontaktanalogen Anzeigen der Lückenmarkierung an der entsprechend ermittelten Anzeigeposition angesteuert. Mit anderen Worten kann die Lückenmarkierung also derart mittels des Head-up-Display angezeigt werden, dass sie optisch bzw. perspektivisch aus Sicht des Fahrers des Kraftfahrzeugs, also aus einer Fahrerposition in dem Kraftfahrzeug betrachtet, dauerhaft relativ zu dem Vorderfahrzeug, insbesondere auch zu der Fahrbahnoberfläche, in einer festen bzw. konstanten relativen räumlichen Lagebeziehung erscheint und verbleibt. Die Lückenmarkierung kann also zumindest dann, wenn die Längsregelung die entsprechende Lücke eingeregelt hat, ebenso als Markierung des erkannten Vorderfahrzeugs fungieren. Dabei kann die Lückenmarkierung insbesondere derart angezeigt werden, dass sie kontaktanalog auf bzw. zu der Fahrbahnoberfläche aus Sicht des Fahrers erscheint, also beispielsweise scheinbar auf der Fahrbahnoberfläche aufliegen bzw. sich darauf in Fahrtrichtung des Kraftfahrzeugs mitbewegend dargestellt wird bzw. erscheint.

Dass die Anzeigeposition zu der aktuell als Regelziel eingestellten Lücke korrespondiert, kann hier bedeuten, dass die scheinbare Entfernung der an der Anzeigeposition angezeigten Lückenmarkierung der eingestellten Lücke bezogen auf die reale Fahrzeugumgebung bzw. Fahrsituation entspricht. Wenn es sich bei der Lücke um eine Zeitlücke handelt, könnte das Kraftfahrzeug zu einem bestimmten Zeitpunkt bei seiner jeweils aktuellen Geschwindigkeit also die scheinbare Position, an der die Lückenmarkierung aufgrund ihrer Darstellung an der bestimmten Anzeigeposition zu diesem Zeitpunkt erscheint, nach Verstreichen einer der eingestellten Zeitlücke entsprechenden Zeit erreichen. Wenn es sich bei der Lücke um eine Weglücke handelt, kann die Lückenmarkierung an der korrespondierenden Anzeigeposition aus Sicht des Fahrers in einem der Weglücke entsprechenden Abstand von dem Kraftfahrzeug erscheinen.

Die Lückenmarkierung kann beispielsweise als quer zur Fahrtrichtung längserstreckter Balken oder als das jeweilige Vorderfahrzeug bzw. dessen Heck teilweise umgreifende Klammer oder dergleichen ausgestaltet sein bzw. angezeigt werden.

In einem weiteren Verfahrensschritt des erfindungsgemäßen Verfahrens wird auf das Erfassen einer Nutzereingabe zum Einstellen einer veränderten neuen Lücke hin ermittelt, ob diese neue Lücke kleiner oder größer als die bisher eingestellte Lücke ist, und die neue Lücke als Regelziel für die Längsregelung eingestellt. Es kann also im Betrieb des Kraftfahrzeugs bzw. des für das erfindungsgemäße Verfahren eingerichteten Assistenzsystems eine laufende Überwachung auf entsprechenden Nutzereingaben durchgeführt werden. Eine solche Nutzereingabe kann beispielsweise von dem Fahrer durch eine entsprechende Betätigung eines Bedienelements, das beispielsweise mit dem Assistenzsystem gekoppelt oder Teil des Assistenzsystem sein kann, erfolgen. Weiter wird auf das Erfassen einer solchen Nutzereingabe hin ausgehend von der aktuellen Vorderfahrzeugposition und/oder der bisherigen, also der zuvor ermittelten Anzeigeposition - und damit also gegebenenfalls indirekt ebenfalls ausgehend von der Vorderfahrzeugposition - eine gemäß der Nutzereingabe verschobene neue Anzeigeposition bestimmt. Die neue Anzeigeposition kann also zumindest qualitativ korrespondierend zu der durch die Nutzereingabe festgelegten neuen Lücke bzw. dazu, ob die neue Lücke kleiner oder größer als die bisherige Lücke ist, bestimmt werden. Zum Bestimmen der Anzeigepositionen kann beispielsweise ein entsprechender Berechnungsalgorithmus vorgegeben sein, der die spezifischen Eigenschaften des jeweiligen Head-up-Displays sowie dessen Anordnung, insbesondere relativ zu der Fahrerposition, berücksichtigt bzw. als vorgegebene Parameter enthält.

In einem weiteren Verfahrensschritt des erfindungsgemäßen Verfahrens wird das Head-up-Display dann - beispielsweise ebenfalls durch das Assistenzsystem - angesteuert, um zusätzlich zu der an der bisherigen Anzeigeposition angezeigten bisherigen Lückenmarkierung in Abhängigkeit von der Nutzereingabe aus Sicht des Fahrers perspektivisch vor oder hinter der bisherigen Lückenmarkierung erscheinend an der neuen Anzeigeposition eine neue Lückenmarkierung kontaktanalog zu der bisherigen Lückenmarkierung, insbesondere wie erläutert auch kontaktanalog zu der Fahrbahnoberfläche, anzuzeigen. Die neue Lücke kann also aus Sicht des Fahrers beispielsweise jeweils zumindest teilweise vor, also diesseits der bisherigen Lückenmarkierung erscheinen, wenn die neue Lücke kleiner als die bisherige Lücke ist, und hinter, also jenseits der bisherigen Lückenmarkierung erscheinen, wenn die neue Lücke größer als die bisherige Lücke ist. Dabei können die bisherige Lückenmarkierung und die neue Lückenmarkierung unterschiedlich ausgestaltet sein. Dadurch kann dem Fahrer besonders einfach und intuitiv die entsprechende Aktivität des Assistenzsystems bzw. der Längsregelung vermittelt und ein besonders einfach und ablenkungsarm erfassbares optisches Feedback dazu gegeben werden, dass die Nutzereingabe des Fahrers erkannt wurde und umgesetzt wird.

Zumindest solange die neue Lücke durch die automatische Längsregelung noch nicht erreicht, also noch nicht eingestellt ist, muss die neue Anzeigeposition, an der die neue Lückenmarkierung angezeigt wird, nicht notwendigerweise bereits der neuen Lücke entsprechen. Ebenso muss dann weder die bisherige Lückenmarkierung noch die neue Lückenmarkierung kontaktanalog zu dem Vorderfahrzeug angezeigt werden. Vielmehr kann dem Fahrer durch die neue Lückenmarkierung zumindest qualitativ angezeigt werden, ob die Lücke, also der Abstand des Kraftfahrzeugs zu dem Vorderfahrzeug, durch die Längsregelung vergrößert oder verkleinert wird. Durch die kontaktanaloge Visualisierung der neuen Lückenmarkierung bezogen auf die bisherige Lückenmarkierung kann dies für den Fahrer besonders einfach und ablenkungsarm erkennbar sein. Beispielsweise kann nach dem Einstellen einer, beispielsweise größeren, neuen Lücke als neues Regelziel die bisherige Lückenmarkierung konstant an derselben Anzeigeposition relativ zu dem Kraftfahrzeug bzw. aus Sicht des Fahrers angezeigt werden, auch wenn sich zum Erreichen bzw. Einstellen der neuen Lücke der Abstand zwischen dem Kraftfahrzeug und dem Vorderfahrzeug ändert, sich das Vorderfahrzeug in diesem Beispiels also von dem Kraftfahrzeug entfernt.

Dadurch, dass die neue Lückenmarkierung dabei, also während die automatische Längsregelung die neue Lücke einstellt, also realisiert, noch nicht in dem der neuen Lücke entsprechenden Abstand von dem Kraftfahrzeug und entsprechend noch nicht notwendigerweise korrekt kontaktanalog zu dem Vorderfahrzeug angezeigt werden bzw. aus Sicht des Fahrers erscheinen muss, kann vorteilhaft beispielsweise sichergestellt werden, dass die neue Lückenmarkierung für den Fahrer sichtbar ist und nicht etwa aus dem Anzeigebereich herausläuft oder dergleichen. Sofern die zu der neuen Lücke korrespondierende, insbesondere ausgehend von der Vorderfahrzeugposition bestimmten, Anzeigeposition bereits bei der entsprechenden Nutzereingabe zum Festlegen der neuen Lücke im für den Fahrer sichtbaren Anzeigebereich des Head-up-Displays liegt, kann die neue Lückenmarkierung ebenso bereits während der Längsregelung zum Erreichen bzw. Einstellen der neuen Lücke an dieser Anzeigeposition angezeigt werden. Dabei kann sich die Vorderfahrzeugposition relativ zu dem Kraftfahrzeug dynamisch bzw. kontinuierlich ändern und somit auch die entsprechende Anzeigeposition beispielsweise entsprechend dynamisch bzw. kontinuierlich neu bestimmt werden. Ebenso kann die neue Lückenmarkierung beispielsweise in dieser Art an der zu der neuen Lücke korrespondierenden und ausgehend von der jeweils aktuellen Vorderfahrzeugposition bestimmten Anzeigeposition angezeigt werden, sobald die dazu notwendige Anzeigeposition im Anzeigebereich des Head-up-Displays liegt. Gegebenenfalls kann Anzeigeposition der neuen Lückenmarkierung kontinuierlich von der ursprünglichen, relativ zu der bisherigen Lückenmarkierung bestimmten neuen Anzeigeposition in die ausgehend von der Vorderfahrzeugposition bestimmte und zu dem Vorderfahrzeug kontaktanaloge Anzeigeposition verschoben werden. Damit kann der Fahrer den entsprechenden Längsregelungsvorgang auch bei einem begrenzten Anzeigebereich des Head-up-Displays stehts besonders einfach und intuitiv verstehen bzw. nachvollziehen.

In einem weiteren Verfahrensschritt des erfindungsgemäßen Verfahrens wird dann, wenn die Längsregelung die neue Lücke erreicht, also den der neuen Lücke entsprechenden Abstand des Kraftfahrzeugs von dem Vorderfahrzeug realisiert hat, das Head-up-Display - beispielsweise ebenfalls durch das Assistenzsystem - angesteuert, um nur noch die neue Lückenmarkierung und nicht mehr die bisherige Lückenmarkierung anzuzeigen. Beispielsweise kann mit Erreichen oder zunehmender Annäherung an das neue Regelziel die bisherige ausgeblendet werden. Die neue Lückenmarkierung tritt dann also an die Stelle der vor der Nutzereingabe angezeigten einzigen Lückenmarkierung und wird dementsprechend an der ausgehend von der dann aktuellen Vorderfahrzeugposition bestimmten zu der neuen Lücke korrespondierenden Anzeigeposition angezeigt. Damit ist dann also die vor der Nutzereingabe gegebene Anzeigesituation mit der neuen Lücke wieder erreicht. Für den nächsten Einstell- oder Verstellvorgang für die Lücke ist damit dann also die zuletzt eingestellte neue Lücke effektiv die dann aktuell eingestellte Lücke, die bei einer weiteren Nutzereingabe zum weiteren Verändern der Lücke zur bisherigen Lücke wird. Durch das zeitweise oder übergangsweise Anzeigen beider Lückenmarkierungen, also der jeweils bisherigen Lückenmarkierungen und der neuen Lückenmarkierung, kann dem Fahrer besonders einfach und ablenkungsarm, also mit einem besonders geringen kognitiven Aufwand erfassbar vermittelt werden, dass seine Nutzereingabe erkannt wurde und welchen Effekt auf die Längsregelung des Kraftfahrzeugs seine Nutzereingabe hat bzw. haben wird.

Dadurch, dass die Anzeigeposition für die Lückenmarkierung zumindest bei eingeregelter entsprechender Lücke hier ausgehend von der Vorderfahrzeugposition bestimmt werden, kann die Lückenmarkierung an dieser Anzeigeposition besonders stabil und robust in der jeweiligen realen Umgebung erscheinend platziert und gehalten werden. Dies ist der Fall, da die Vorderfahrzeugposition mittels heutzutage für Kraftfahrzeuge verfügbarer Umgebungssensoriken besonders präzise, zuverlässig und stabil bestimmt und getrackt, also nachverfolgt werden kann. Insbesondere kann die derart bestimmte Vorderfahrzeugposition somit als räumlicher Ankerpunkt oder Referenzpunkt für das Bestimmen der Anzeigeposition verwendet werden, der genauer, stabiler und zuverlässiger bekannt bzw. lokalisiert ist als die jeweilige Umgebung bzw. andere Umgebungsdetails. So liegen beispielsweise Kartendaten oder Umfeldmodelle oftmals nicht mit derselben räumlichen Präzision oder Auflösung vor, mit der die Vorderfahrzeugposition bestimmt und nachverfolgt werden kann. Damit kann durch die Verwendung der Vorderfahrzeugposition als Ausgangspunkt, also als Anker oder Referenzpunkt für das Bestimmen der Anzeigepositionen eine entsprechend genaue und stabile und damit entsprechende ruhige und ablenkungsarme Visualisierung der jeweiligen Lückenmarkierung und damit auch der Funktionsweise oder Aktivität der Längsregelung erreicht werden.

Beispielsweise kann also die bisherige Lückenmarkierung kontaktanalog zu dem jeweiligen Vorderfahrzeug angezeigt werden. Wird dann durch die Nutzereingabe eine andere Lücke eingestellt, so kann zum Bestimmen einer scheinbaren Position, an der die neue Lückenmarkierung aus Sicht des Fahrers erscheinen soll, ein der neuen Lücke entsprechender Abstand oder Weg von der Vorderfahrzeugposition abgezogen oder auf diese addiert werden. Ebenso kann dazu beispielsweise ein der Differenz zwischen der bisherigen Lücke und der neuen Lücke entsprechender Abstand oder Weg berechnet und damit die entsprechende scheinbare Position für die neue Lückenmarkierung berechnet werden. Unter Berücksichtigung der Eigenschaften oder Anzeigeparameter des Head-Up-Displays kann dann diejenige Anzeigeposition ermittelt werden, die dazu führt, dass die neue Lückenmarkierung aus Sicht des Fahrers oder beispielsweise einer vorgegebenen Betrachtungsposition an der entsprechend bestimmten scheinbaren Position erscheint. Insbesondere dann, wenn die so bestimmte neue Anzeigeposition außerhalb des Anzeigebereichs des Head-up-Displays liegen würde, kann ebenso die neue Anzeigeposition für die neue Lückenmarkierung zunächst in einem vorgegebenen Abstand zu der Anzeigeposition der bisherigen Lückenmarkierung angezeigt werden. Dieser vorgegebene Abstand kann also bis auf das Vorzeichen unabhängig von der tatsächlichen Differenz zwischen der bisherigen Lücke und der neuen Lücke sein.

Würde hingegen die Anzeigeposition für die Lückenmarkierung beispielsweise anhand von Kartendaten bestimmt werden, so würde diese oftmals typischerweise weniger robust und weniger genau passend zu Details der jeweiligen realen Umgebung erscheinen. Dies könnte einen erhöhten kognitiven Aufwand für das Verständnis sowie gegebenenfalls eine erhöhte Unsicherheit beim Fahrer verursachen. Gleichfalls würde auch eine alternativ mögliche abstrakte, also beispielsweise nicht kontaktanalog an die jeweilige reale Umgebung gekoppelte Anzeige der aktuell eingestellten Lücke, beispielsweise mittels einer entsprechenden Skala oder eines entsprechenden Zahlenwerts oder einer Fahrtkodierung oder dergleichen, einen erhöhten kognitiven Aufwand zum Übertragen der entsprechenden abstrakten Information zur eingestellten Zeitlücke auf bzw. in die jeweilige lokale Umgebung, also für ein entsprechendes in-Einklang-Bringen erfordern. Damit würde letztlich weniger kognitives Potenzial bzw. Aufmerksamkeit des Fahrers für andere Aspekte zur Verfügung stehen. Durch die vorliegende Erfindung kann somit also der Fahrer mehr Aufmerksamkeit bzw. kognitives Potenzial dem umgebenden Verkehrsgeschehen und/oder anderen Fahrzeugfunktionen widmen, was letztlich zu einer verbesserten Sicherheit im Betrieb des Kraftfahrzeugs bzw. im Verkehrsgeschehen insgesamt beitragen kann.

Ein weiterer Vorteil der vorliegenden Erfindung besteht darin, dass durch die Nutzung der Vorderfahrzeugposition bzw. der bisherigen Anzeigeposition als Ausgangspunkt für das Bestimmen der Anzeigeposition bei mehreren möglichen bzw. einstellbaren oder auswählbaren Lücken besonders zuverlässig diese bzw. entsprechende Hinweise oder korrespondierende Lückenmarkierungen sämtlich dem Fahrer angezeigt werden können. Dies ist bei bisherigen Lösungen nicht immer zuverlässig der Fall, beispielsweise aufgrund einer Abhängigkeit der Anzeige von einer aktuellen Ist-Geschwindigkeit des Kraftfahrzeugs und einer FOV-Position, also dem Augpunkt und damit der Größe des Fahrers. Demgegenüber ermöglicht die vorliegende Erfindung eine konsistente und durchgängige Anzeige, also ein entsprechend robustes optisches Feedback zur Bedienung und Aktivität des entsprechenden Assistenzsystems bzw. der Längsregelung. Damit kann beispielsweise vermieden werden, dass der Fahrer durch eine unvollständige oder nicht verfügbare oder zeitweise aussetzende Darstellung zusätzlich kognitiv belastet und abgelenkt wird oder er beispielsweise mehrfach seinen Blick und seine Aufmerksamkeit auf die entsprechende Darstellung lenken muss. Dies kann ebenfalls letztlich der verbesserten Sicherheit im Verkehrsgeschehen zugutekommen.

Die vorliegende Erfindung betrifft auch ein Assistenzsystem für ein Kraftfahrzeug. Das erfindungsgemäße Assistenzsystem ist dazu eingerichtet, fortlaufend automatisch die jeweils aktuelle relative Vorderfahrzeugposition des in Fahrtrichtung, insbesondere unmittelbar, vorausfahrenden Vorderfahrzeugs zu erfassen bzw. zu ermitteln. Weiter ist das Assistenzsystem dazu eingerichtet, automatisch ausgehend von dieser Vorderfahrzeugposition die zu der jeweils aktuell als Regelziel für die automatische Längsregelung des Kraftfahrzeugs eingestellten Lücke zu dem Vorderfahrzeug, also einer Zeitlücke oder Weglücke, korrespondierende Anzeigeposition für die zu dem Vorderfahrzeug, insbesondere auch zur Fahrbahnoberfläche kontaktanaloge Lückenmarkierung zu bestimmen und ein Head-up-Display zum bezogen auf das Vorderfahrzeug, insbesondere auch bezogen auf die Fahrbahnoberfläche, kontaktanalogen Anzeigen der Lückenmarkierung an der ermittelten Anzeigeposition anzusteuern. Das Head-up-Display kann dabei Teil des Assistenzsystems oder mit diesem, in bestimmungsgemäßer Einbaulage beispielsweise über ein Bordnetz des jeweiligen Kraftfahrzeugs, gekoppelt sein.

Weiter ist das erfindungsgemäße Assistenzsystem dazu eingerichtet, automatisch auf das Erfassen einer Nutzereingabe zum Einstellen einer veränderten neuen Lücke hin ausgehend von der Vorderfahrzeugposition und/oder der bisherigen Anzeigeposition die gemäß der Nutzereingabe verschobene neue Anzeigeposition zu bestimmen. Weiter ist das Assistenzsystem dazu eingerichtet, automatisch das Head-up-Display anzusteuern, um zusätzlich zu der an der bisherigen Anzeigeposition angezeigten bisherigen Lückenmarkierung an der neuen Anzeigeposition die neue Lückenmarkierung kontaktanalog zu der bisherigen Lückenmarkierung, insbesondere wie erläutert auch kontaktanalog zu der Fahrbahnoberfläche, anzuzeigen, sodass die neue Lückenmarkierung je nachdem, ob die neue Lücke kleiner oder größer als die bisherige Lücke ist, aus Sicht des Fahrers perspektivisch vor oder hinter der bisherigen Lückenmarkierung erscheint. Weiter ist das Assistenzsystem dazu eingerichtet, automatisch dann, wenn die Längsregelung die neue Lücke erreicht bzw. realisiert hat, das Head-up-Display anzusteuern, um dann nur noch die neue Lückenmarkierung an der ausgehend von der aktuellen Vorderfahrzeugposition bestimmten zu der neuen Lücke korrespondierenden Anzeigeposition als einzige Lückenmarkierung anzuzeigen und nicht mehr die bisherige Lückenmarkierung anzuzeigen. Mit anderen Worten kann das erfindungsgemäße Assistenzsystem also für das erfindungsgemäße Verfahren bzw. zur Verwendung in dem erfindungsgemäßen Verfahren eingerichtet sein. Das erfindungsgemäße Assistenzsystem kann also insbesondere das im Zusammenhang mit dem erfindungsgemäßen Verfahren genannte Assistenzsystem sein oder diesem entsprechen.

In einer möglichen Ausgestaltung der vorliegenden Erfindung ist das Assistenzsystem dazu eingerichtet, dann, wenn bei aktiver Längsregelung keine Vorderfahrzeugposition ermittelt werden kann, das Head-up-Display und/oder eine andere Anzeigeeinrichtung zum Anzeigen einer vorgegebenen graphischen Repräsentation der jeweils eingestellten Lücke anzusteuern. Diese grafische Repräsentation kann dabei insbesondere nicht kontaktanalog angezeigt werden. Als andere Anzeigeneinrichtung kann je nach Ausgestaltung oder Anwendungsfall beispielsweise ein Kombiinstrument oder ein Infotainmentbildschirm des Kraftfahrzeugs oder dergleichen verwendet bzw. angesteuert werden. Dass keine Vorderfahrzeugposition ermittelt werden kann, kann beispielsweise dann auftreten, wenn, beispielsweise im Erfassungsbereich der verwendeten Umgebungssensorik, kein Vorderfahrzeug vorhanden ist oder ein solches nicht zuverlässig erkannt werden kann. Letzteres kann beispielsweise aufgrund von Witterungs- oder Umgebungseinflüssen oder aufgrund einer Beschädigung oder Verdeckung der Umgebungssensorik oder dergleichen auftreten. In einem solchen Fall kann dann also auf die vorgegebene, insbesondere umgebungsunabhängige, grafische Repräsentation als Rückfalllösung zurückgegriffen werden. Wie im Zusammenhang mit dem erfindungsgemäßen Verfahren beschrieben kann die vorgegebene grafische Repräsentation beispielsweise als entsprechende Skala oder als Zahlenwert oder dergleichen ausgestaltet sein. Die vorgegebene grafische Repräsentation kann beispielsweise eine 2D- oder 3D-Darstellung sein oder umfassen. Die vorgegebene grafische Repräsentation kann beispielsweise vollständig umgebungsunabhängig angezeigt werden. Ebenso kann die vorgegebene grafische Repräsentation beispielsweise an einer Anzeigeposition angezeigt werden, die - wie im Zusammenhang mit dem erfindungsgemäßen Verfahren erwähnt - beispielsweise basierend auf einem jeweiligen 2D- oder 3D-Umfeldmodell bestimmt wird. Ein solches Umfeldmodell kann beispielsweise anhand der jeweils verfügbaren Sensor- oder Umgebungsdaten und/oder unter Verwendung vorgegebener Umfeld- oder Kartendaten und/oder dergleichen mehr erzeugt werden. Ein solches Umfeldmodell kann dabei insbesondere statische Umgebungsobjekte enthalten, wie etwa die Fahrbahnoberfläche, den Straßenverlauf, Fahrstreifenmarkierungen, Randstreifen und/oder dergleichen mehr. Damit kann die vorgegebene grafische Repräsentation gegebenenfalls zwar weniger genau zur jeweiligen realen Umgebung passen als die an der ausgehend von der Vorderfahrzeugposition ermittelten Anzeigeposition angezeigte Lückenmarkierung, aber dennoch dem Fahrer ein zuverlässiges optisches Feedback zu seinen Nutzereingaben bzw. der Aktivität der Längsregelung geben. Auf diese Weise kann also ein entsprechendes Einbinden des Fahrers in allen Situationen ermöglicht bzw. sichergestellt werden.

In einer weiteren möglichen Ausgestaltung der der vorliegenden Erfindung ist das Assistenzsystem dazu eingerichtet, das Head-up-Display jeweils anzusteuern, um während der gleichzeitigen Darstellung der bisherigen Lückenmarkierung und der neuen Lückenmarkierung diese beiden Lückenmarkierungen mit unterschiedlicher Prägnanz anzuzeigen. Dazu kann beispielsweise die bisherige Lückenmarkierung relativ, also im Vergleich zu der neuen Lückenmarkierung abgeschwächt angezeigt werden oder umgekehrt. Eine solche Abschwächung bzw. reduzierte Prägnanz kann beispielsweise durch eine andere Farbe und/oder einen anderen, insbesondere helleren, Farbton und/oder eine geringere Helligkeit und/oder eine geringere Intensität und/oder eine geringere Farbsättigung und/oder eine geringere Größe und/oder einen geringeren Füllungsgrad einer jeweiligen Darstellungsfläche und/oder dergleichen mehr erreicht werden. Diese unterschiedliche Darstellung bzw. Prägnanz kann beispielsweise so lange aufrechterhalten werden, bis die Längsregelung die neue Lücke erreicht hat. Es kann dann nur noch die neue Lückenmarkierung angezeigt werden. Insbesondere kann eine dynamische bzw. graduelle Veränderung der Darstellung der bisherigen Lückenmarkierung und/oder der neuen Lückenmarkierung erfolgen. Damit kann das graduelle Realisieren bzw. Erreichen der neuen Lücke durch die Längsregelung, also deren Fortschritt bei der Regelung bzw. beim zumindest erstmaligen Erreichen des Regelziels repräsentiert und veranschaulicht werden. Damit kann dem Fahrer eine besonders einfach, intuitiv und ablenkungsarm erfassbare Rückmeldung dazu gegeben werden, dass die Nutzereingabe erkannt wurde und wie diese umgesetzt wird.

In einer weiteren möglichen Ausgestaltung der vorliegenden Erfindung ist das Assistenzsystem dazu eingerichtet, das Head-up-Display jeweils anzusteuern, um mit Realisieren bzw. Erreichen der neuen Lücke durch die Längsregelung die bisherige Lückenmarkierung graduell auszublenden. Mit anderen Worten erfolgt dann also kann kein abruptes oder sprunghaftes Ausschalten oder Deaktivieren der Anzeige der bisherigen Lückenmarkierung. Vielmehr kann diese beispielsweise durch ein Fading der Intensität und/oder der Helligkeit und/oder der Farbsättigung und/oder durch eine Größenverringerung und/oder durch eine fortschreitende Reduzierung des Füllungsgrad der jeweiligen Darstellungsfläche und/oder dergleichen mehr nach und nach ausgeblendet werden. Dadurch kann der Fahrer besonders einfach, intuitiv und ablenkungsarm zu sämtlichen Zeitpunkten erkennen, welche Lückenmarkierung die neue Lückenmarkierung ist und wann bzw. ob diese bereits erreicht ist oder erreicht wird. Dadurch kann beispielsweise vermieden werden, dass der Fahrer verwirrt wird bzw. darüber im Unklaren ist, ob eine einzige angezeigte Lückenmarkierung die neue Lückenmarkierung oder die bisherige Lückenmarkierung ist, also seine Nutzereingabe erkannt und umgesetzt wurde, beispielsweise wenn er bei oder nach seiner Nutzereingabe seinen Blick oder seine Aufmerksamkeit nicht oder nicht durchgehend auf die entsprechende Darstellung gelenkt hat. Ebenso kann ein abruptes Ausschalten oder Deaktivieren der bisherigen Lückenmarkierung, also eine entsprechend plötzliche Veränderung der Darstellung ablenkend wirken, was durch die hier vorgeschlagene Ausgestaltung der vorliegenden Erfindung ebenfalls vermieden werden kann. Damit kann also eine entsprechende Ablenkung oder ein Erschrecken des Fahrers vermieden und somit die Sicherheit weiter verbessert werden.

In einer weiteren möglichen Ausgestaltung der vorliegenden Erfindung ist das Assistenzsystem dazu eingerichtet, auf das Erfassen einer ersten Betätigung eines für das Einstellen der Lücke bestimmten Bedienelements, also auf eine entsprechende ersten Nutzereingabe oder Nutzerbedienhandlung hin zunächst ohne Änderung der Lücke, also ohne Änderung des Regelziels der Längsregelung, in einen Verstellmodus zu wechseln. Das Assistenzsystem ist dann weiter dazu eingerichtet, in diesem Verstellmodus das Head-up-Display zum Anzeigen eines vorgegebenen Indikators für die Möglichkeit zum Verstellen Verändern der Lücke anzusteuern. Dadurch kann also deutlich gemacht werden, dass nun die Lücke, insbesondere durch eine weitere Nutzereingabe, verändert werden kann. Dies kann dann auf das Erfassen einer zweiten bzw. weiteren Betätigung des Bedienelements, die dann als die im Zusammenhang mit dem erfindungsgemäßen Verfahren und dem erfindungsgemäßen Assistenzsystem genannte Nutzereingabe zum Einstellen der veränderten neuen Lücke erfasst wird, erfolgen. Auf diese Weise kann beispielsweise eine auf einer unabsichtlichen Fehlbedienung bzw. Fehlbetätigung beruhende Veränderung der Lücke und somit eine daraus resultierende Ablenkung oder Verunsicherung des Fahrers vermieden oder zumindest weniger wahrscheinlich gemacht werden.

In einer weiteren möglichen Ausgestaltung der vorliegenden Erfindung ist das Assistenzsystem dazu eingerichtet, alle jeweils möglichen Lücken zu bestimmen und zur Auswahl bereitzustellen. Beispielsweise kann prinzipiell ein gewisser Umfang oder Verstellbereich vorgesehen sein, von dem in einer bestimmten Situation jedoch nur ein Teil oder eine bestimmte Auswahl tatsächlich genutzt werden kann. Beispielsweise kann eine besonders kleine oder kurze Lücke nur unterhalb einer vorgegebenen Geschwindigkeit des Kraftfahrzeugs möglich, also einstellbar bzw. für den Nutzer auswählbar sein. Es können also laufend bzw. regelmäßig wiederholt die in der jeweiligen Situation möglichen, also einstellbaren bzw. zulässigen Lücken bestimmt werden. Damit kann vermieden werden, dass der Fahrer versucht, eine in der jeweiligen Situation unzulässige, also nicht mögliche Lücke einzustellen. Letzteres könnte dazu führen, dass der Fahrer beispielsweise erhöhten kognitiven Aufwand für das Überwachen der Reaktion des Assistenzsystems bzw. der Längsregelung und für das Verständnis der gegebenenfalls ausbleibenden Realisierung seines Wunsches aufbringen muss und/oder der Fahrer zusätzlichen Aufwand und zusätzliche Aufmerksamkeit für das Einstellen einer anderen, möglichen bzw. zulässigen Lücke aufbringen muss, was ebenso zu einer erhöhten Ablenkung der Aufmerksamkeit des Fahrers vom umgebenden Verkehrsgeschehen führen oder beitragen kann. Somit kann durch die hier vorgeschlagene Ausgestaltung der vorliegenden Erfindung also erreicht bzw. sichergestellt werden, dass der Fahrer mit minimalem kognitiven Aufwand und minimalem Bedienaufwand eine Lücke einstellen kann, die dann auch tatsächlich realisiert werden kann.

In einer weiteren möglichen Ausgestaltung der vorliegenden Erfindung ist das Assistenzsystem dazu eingerichtet, jeweils auf das Erfassen der bzw. einer ersten Betätigung des für das Einstellen der Lücke bestimmten Bedienelements hin, also insbesondere schon mit Wechsel in den an anderer Stelle genannten Verstellmodus, das Head-up-Display zum gleichzeitigen Anzeigen aller jeweils einstellbaren möglichen Lücken anzusteuern. Mit anderen Worten kann hier also wie oder ähnlich wie an anderer Stelle beschrieben zunächst die bzw. eine erste Nutzereingabe erfasst werden, die gegebenenfalls der Nutzereingabe zum eigentlichen Einstellen bzw. Auswählen der veränderten neuen Lücke vorausgeht. Auf diese Weise kann der Fahrer dann besonders frühzeitig und schnell die in der jeweiligen Situation möglichen einstellbaren Lücken erfassen. Damit kann der Fahrer dann besonders schnell und gezielt seine Auswahl treffen und die gewünschte Lücke einstellen.

In einer alternativen möglichen Ausgestaltung der vorliegenden Erfindung ist das Assistenzsystem dazu eingerichtet, das Head-up-Display anzusteuern, um die jeweils einstellbaren möglichen Lücken erst auf das Erfassen der Nutzereingabe zum Einstellen der veränderten neuen Lücke hin anzuzeigen. Mit anderen Worten können also auf die entsprechende Nutzereingabe hin sowohl die veränderte Lücke eingestellt bzw. ausgewählt oder zumindest voreingestellt bzw. vorausgewählt werden und die in der jeweiligen Situation ebenso einstellbaren bzw. auswählbaren möglichen Lücken angezeigt werden. Dies kann insbesondere in Verbindung mit dem an anderer Stelle beschriebenen zunächst vorgesehenen Wechsel in den Verstellmodus nützlich sein oder dazu dienen, dem Fahrer besonders einfach, verständlich und ablenkungsarm ein visuelles Feedback zu seiner Nutzereingabe zu geben und ihm zu signalisieren, dass er weitere Einstellmöglichkeiten hat. Dabei kann die potenzielle zusätzliche visuelle Ablenkung durch das Anzeigen in der jeweils anderen möglichen Lücken erst dann erfolgen, wenn der Fahrer tatsächlich bereit ist, die gewünschte Lücke einzustellen bzw. auszuwählen. Zu diesem Zeitpunkt kann dann die Ablenkung und der kognitive Aufwand zum Erfassen und Verarbeiten der angezeigten möglichen Lücken reduziert werden, da der Fahrer dann mental bereits darauf vorbereitet ist. Insgesamt kann somit eine reduzierte bzw. zeitlich minimierte Überdeckung oder Ablenkung von anderen dargestellten Informationen, also ein sogenannter visueller Clutter durch die möglichen Lücken erreicht werden.

Unabhängig von der sonstigen Ausgestaltung können in der jeweiligen Situation verfügbare, also einstellbare mögliche Lücken anders als die bisherige Lückenmarkierung, insbesondere auch anders als die jeweils ausgewählte oder eingestellte bzw. vorausgewählte oder voreingestellte neue Lücken angezeigt werden. Beispielsweise können die anderen möglichen Lücken jeweils wie an anderer Stelle erläutert mit reduzierter Prägnanz angezeigt werden.

Die vorliegende Erfindung betrifft auch ein Kraftfahrzeug, das zur automatisierten Längsregelung des Kraftfahrzeugs eingerichtet ist und ein Head-up-Display aufweist. Das erfindungsgemäße Kraftfahrzeug ist dabei zum, insbesondere automatischen oder teilautomatischen, Ausführen des erfindungsgemäßen Verfahrens eingerichtet und/oder mit dem erfindungsgemäßen Assistenzsystem ausgestattet. Das erfindungsgemäße Kraftfahrzeug kann also insbesondere das im Zusammenhang mit dem erfindungsgemäßen Verfahren und/oder im Zusammenhang mit dem erfindungsgemäßen Assistenzsystem genannte Kraftfahrzeug sein oder diesem entsprechen. Das erfindungsgemäße Kraftfahrzeug kann also auch einige oder alle der in diesen Zusammenhängen genannten Eigenschaften oder Merkmale aufweisen, wie beispielsweise die Umgebungssensorik oder dergleichen.

Die Zeichnung zeigt in:
- Fig. 1: einen ausschnittweisen beispielhaften schematischen Ablaufplan für ein Verfahren für einen Längsregelungsbetrieb eines Kraftfahrzeugs;
- Fig. 2: eine schematische Darstellung einer Verkehrsszene aus Sicht eines Fahrers des Kraftfahrzeugs zu einem ersten Zeitpunkt;
- Fig. 3: eine schematische Darstellung der Verkehrsszene aus Sicht zu einem späteren zweiten Zeitpunkt;
- Fig. 4: eine schematische Darstellung der Verkehrsszene aus Sicht zu einem späteren dritten Zeitpunkt; und
- Fig. 5: eine schematische Darstellung einer Alternativdarstellung zum Veranschaulichen einer aktuell als Regelziel für die Längsregelung eingestellten Lücke.

Gleiche oder funktionsgleiche Elemente sind in den Figuren mit den gleichen Bezugszeichen versehen.

In Fahrzeugen mit einer automatisierten Längsregelung kann typischerweise durch einen jeweiligen Fahrer eine Lücke, also eine Zeitlücke und/oder eine Weglücke zu einem vorausfahrenden Fahrzeug eingestellt werden. Eine entsprechende Lückenverstellung kann dabei herkömmlicherweise über 2D- oder 3D-Umfeldmodelle oder vorgegebene Grafiken an den Fahrer kommuniziert werden. Um eine entsprechende Darstellung dann jedoch auf die reale Fahrsituation zu übertragen kann allerdings eine signifikante kognitive Leistung des Fahrers erforderlich sein. Zwar kann durch eine kontaktanaloge Darstellung der Lückenverstellung der kognitive Aufwand im Kontext der Informationsverarbeitung durch den jeweiligen Fahrer bzw. Betrachter reduziert werden. Mit bisherigen Ansätzen können aber in vielen Situationen zudem nicht alle möglichen Lücken zuverlässig angezeigt werden, wodurch dann keine durchgängige Anzeige der Bedienung möglich ist. Zudem kann die Lückenverstellung in jeder Fahrsituation aktivierbar sein und damit insbesondere auch in Situationen mit begrenzter oder unzureichender Datengenauigkeit bezüglich der jeweiligen Umgebung. Dadurch können virtuelle Darstellungen oder Anzeigen nicht immer stabil und robust kontaktanalog in der jeweiligen Umgebung platziert bzw. virtuell angezeigt werden, was wiederum zu einer unruhigen und damit gegebenenfalls ablenkenden Anzeige führen kann. Dieser Problematik kann jedoch begegnet werden.

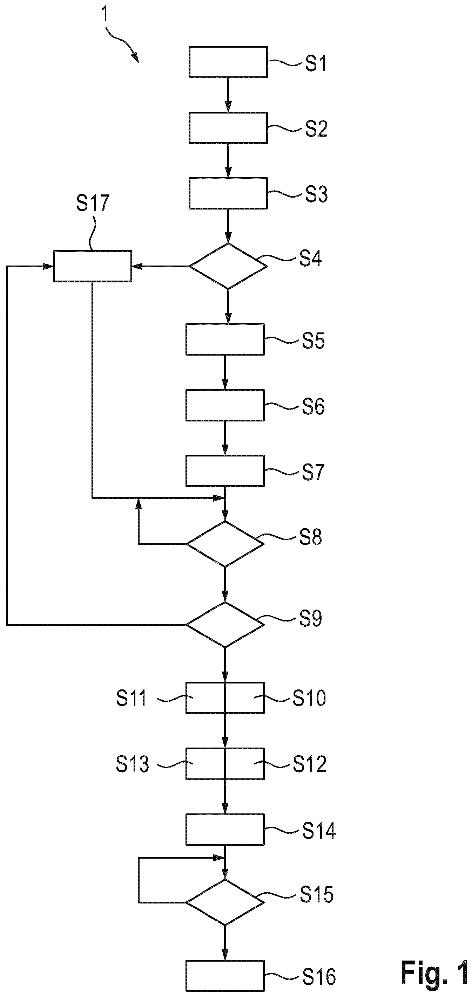

Dazu zeigt Fig. 1 einen beispielhaften schematischen Ablaufplan 1 für ein entsprechendes Verfahren. Dieses wird nachfolgend unter Bezugnahme auf die übrigen Figuren näher erläutert.

In einem Verfahrensschritt S1 kann die automatisierte Längsregelung, also beispielsweise ein ACC-System, in einem jeweiligen Kraftfahrzeug aktiviert werden. In einem Verfahrensschritt S2 kann dann die aktuell eingestellte Lücke ermittelt und als Regelziel für die Längsregelung gesetzt werden.

In einem Verfahrensschritt S3 können Umgebungsdaten einer Umgebungssensorik des Kraftfahrzeugs erfasst werden. Dies ist hier spezifisch für die Längsregelung bzw. durch die Längsregelung zu verstehen, da im Betrieb des Kraftfahrzeugs beispielsweise auch vor oder parallel zu den übrigen Verfahrensschritten fortlaufend entsprechende Umgebungsdaten erfasst werden können.

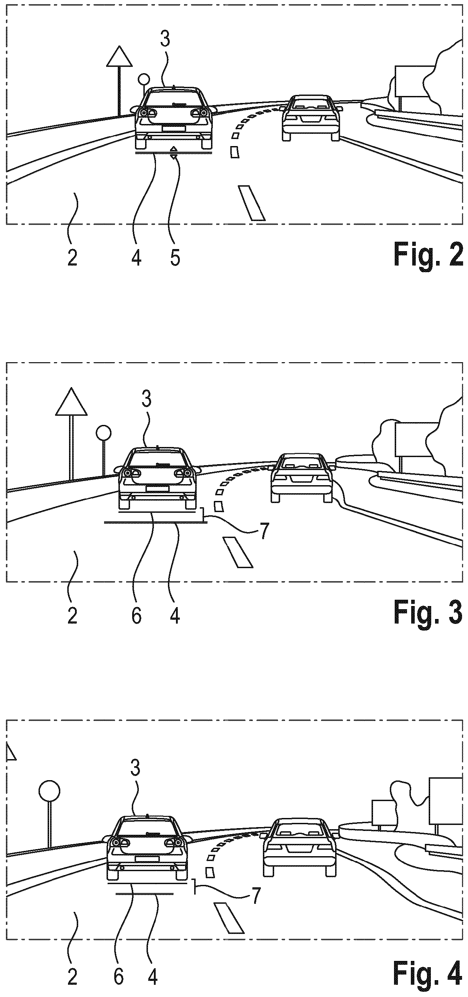

In einem Verfahrensschritt S4 kann anhand der erfassten Umgebungsdaten abgefragt oder überprüft werden, ob ein vorausfahrendes Fahrzeug erkannt wird bzw. erkannt wurde. Dazu zeigt Fig. 2 eine beispielhafte schematische Darstellung einer Verkehrsszene aus Sicht des Kraftfahrzeugs, in dem das hier beschriebene Verfahren durchgeführt wird, zu einem ersten Zeitpunkt. Dabei vor dem Kraftfahrzeug ein Vorderfahrzeug 3. Auf dieses Vorderfahrzeug 3 kann durch die Längsregelung geregelt werden. Mit anderen Worten kann also die als Regelziel eingestellte Lücke zu diesem Vorderfahrzeug 3 bestimmt bzw. eingehalten werden.

Wurde also ein solches Vorderfahrzeug 3 erkannt, das bzw. dessen Position als Regelziel für die Längsregelung verwendet werden kann, kann in einem Verfahrensschritt S5 eine entsprechende Vorderfahrzeugposition, also die Position des erkannten Vorderfahrzeugs 3, beispielsweise relativ zu dem eigenen Kraftfahrzeug ermittelt werden.

In einem Verfahrensschritt S6 kann ausgehend von der ermittelten Vorderfahrzeugposition eine Anzeigeposition auf bzw. in einem Head-up-Display des Kraftfahrzeugs für eine entsprechende Markierung bestimmt werden. Eine solche Markierung ist beispielhaft in Fig. 2 als bisherige Lückenmarkierung 4 dargestellt. Mit dieser bisherigen Lückenmarkierung 4 kann das erkannte Vorderfahrzeug 3 beispielsweise an seiner heckseitigen Unterkante kontaktanalog markiert werden, sodass diese bisherige Lückenmarkierung 4 also dem Vorderfahrzeug 3 folgt. Das entsprechende kontaktanaloge Anzeigen der bisherigen Lückenmarkierung 4 kann dann im Verfahrensschritt S7 erfolgen bzw. aktiviert werden.

In einem Verfahrensschritt S8 kann eine Überwachung auf eine Nutzereingabe erfolgen. Sofern zu einem bestimmten Zeitpunkt oder in einem bestimmten Zeitschritt bzw. Überprüfungsschritt keine solche Nutzereingabe erkannt wird, kann die Überwachung fortgesetzt werden, wie hier durch einen schleifenförmigen Pfad angedeutet ist. Eine entsprechende Nutzereingabe kann beispielsweise durch eine Betätigung einer Bedientaste, die mit der Längsregelung bzw. der Lückenverstellung verknüpft bzw. gekoppelt ist, erfolgen. Eine solche Bedientaste kann beispielsweise am Lenkrad des Kraftfahrzeugs angeordnet sein. Dies kann eine möglichst einfache und ablenkungsarme Bedienung bzw. Betätigung ermöglichen.

Wird eine solche Nutzereingabe erfasst, kann in einem Verfahrensschritt S9 beispielsweise erneut überprüft werden, ob dann das bzw. ein Vorderfahrzeug 3 erkannt wird. Ist dies der Fall, so kann in einem Verfahrensschritt S10 dessen aktuelle Vorderfahrzeugposition ermittelt werden. Beispielsweise parallel dazu kann in einem Verfahrensschritt S11 ein Verstellmodusindikator 5 angezeigt werden. Dadurch kann also deutlich gemacht werden, dass die Lücke, also der zeitliche und/oder räumlicher Abstand zu dem Vorderfahrzeug 3, nun durch den Fahrer verändert werden kann. Dabei kann gleichzeitig eine Überwachung auf eine entsprechende weitere Nutzereingabe zum Verändern der eingestellten Lücke, also zum Auswählen oder Einstellen einer neuen Lücke durchgeführt werden.

Es kann also beispielsweise auf eine erste Nutzereingabe hin zunächst ohne Veränderung der eingestellten Lücke der Verstellmodusindikator 5 angezeigt werden. Es kann dann beispielsweise erst auf eine weitere Nutzereingabe hin, also etwa bei erneuter Betätigung der Bedientaste, gemäß der Nutzereingabe eine entsprechende weitere Markierung perspektivisch räumlich hinter oder vor der bisherigen Lückenmarkierung 4 angezeigt werden. Damit kann signalisiert werden, dass eine entsprechende Vergrößerung bzw. Verringerung der Lücke umgesetzt wird.

Wurde durch eine entsprechende Nutzereingabe bzw. die weitere Nutzereingabe durch den jeweiligen Nutzer bzw. Fahrer eine neue Lücke eingestellt, so kann in einem Verfahrensschritt S12 eine dazu korrespondierende Anzeigeposition für eine entsprechende Lückenmarkierung bestimmt werden. Dazu zeigt Fig. 3 eine beispielhafte schematische Darstellung der Verkehrsszene aus Fig. 2 zu einem entsprechend späteren zweiten Zeitpunkt. Hier sind gleichzeitig die bisherige Lückenmarkierung 4 und eine gemäß der Nutzereingabe relativ dazu verschobene neue Lückenmarkierung 6 dargestellt. Die bisherige Lückenmarkierung 4 kann dabei gemäß der bisher eingestellten Lücke weiterhin konstant in dem entsprechenden Abstand von dem Kraftfahrzeug erscheinend angezeigt werden. Da vorliegend durch die Nutzereingabe jedoch eine größere Lücke eingestellt wurde und nun beispielsweise parallel in einem Verfahrensschritt S13 als Regelziel für die Längsregelung eingestellt wurde bzw. verwendet wird, muss dann die bisherige Lückenmarkierung 4 nicht mehr kontaktanalog an bzw. zu dem Vorderfahrzeug 3 dargestellt werden. Mit Erfassen der Nutzereingabe zum Einstellen der neuen Lücke kann also die bisherige Lückenmarkierung 4 bzw. deren Anzeigeposition fixiert bzw. von dem Vorderfahrzeug 3 bzw. von dessen Vorderfahrzeugposition entkoppelt werden. Damit kann sich beispielsweise bei einer eingestellten größeren neuen Lücke das Vorderfahrzeug 3 von der bisherigen Lückenmarkierung 4 entfernen.

Da die neu eingestellte Lücke durch die Längsregelung noch nicht erreicht ist, kann hier die neue Lückenmarkierung 6 im Vergleich zu der bisherigen Lückenmarkierung 4 mit reduzierter Prägnanz dargestellt werden. Die Anzeigenposition für die neue Lückenmarkierung 6 kann dabei je nach Situation beispielsweise relativ zu der Anzeigeposition der bisherigen Lückenmarkierung bestimmt werden, zumindest solange die neue Lücke noch nicht erreicht, also eingeregelt ist. Dabei kann also die neue Lückenmarkierung 6 beispielsweise kontaktanalog zu der bisherigen Lückenmarkierung 4 angezeigt werden bzw. aus Sicht des Fahrers erscheinen. Ebenso könnte Anzeigeposition für die neue Lückenmarkierung 6 beispielsweise so bestimmt werden, dass die neue Lückenmarkierung 6 aus Sicht des Fahrers bereits initial in dem der neuen Lücke entsprechenden Abstand von dem Kraftfahrzeug erscheint. Insbesondere in diesem Fall, könnte die Anzeigeposition für die neue Lückenmarkierung ausgehend von der jeweils aktuellen Vorderfahrzeugposition bestimmt und dementsprechend laufend aktualisiert werden. Insbesondere in ersterem Fall kann gleichzeitig zum Veranschaulichen der Aktivität der Längsregelung zum Erreichen der neu eingestellten Lücke ein entsprechender Veränderungsindikator 7 angezeigt werden. Dieser kann beispielsweise als Pfeil die Veränderung der Lücke anzeigen - wobei die Ausrichtung bzw. Pfeilrichtung davon abhängen kann, ob die neu eingestellte Lücke größer oder kleiner als die bisher eingestellte Lücke ist.

Während die Längsregelung ausgehend von der bisherigen Lücke die neu eingestellte Lücke einregelt, können in einem Verfahrensschritt S14 wie hier dargestellt sowohl die bisherige Lückenmarkierung 4 als auch die neue Lückenmarkierung 6 gleichzeitig angezeigt werden. Währenddessen kann in einem Verfahrensschritt S15 überprüft werden, ob die neue Lücke, also das neu eingestellte Regelziel erreicht ist. Solange dies nicht der Fall ist, also während die Längsregelung noch mit dem Einstellen bzw. Erreichen des neuen Regelziels, also der neu eingestellten Lücke gemäß der entsprechenden Nutzereingabe beschäftigt ist, kann die Darstellung der Lückenmarkierungen 4, 6 oder zumindest der bisherigen Lückenmarkierung 4, insbesondere dynamisch bzw. graduell angepasst werden. Dazu zeigt Fig. 4 beispielhaft eine schematische Darstellung der Verkehrsszene zu einem nochmals späteren dritten Zeitpunkt. Hier ist das Erreichen der neu eingestellten Lücke durch die Längsregelung bereits weiter fortgeschritten und dementsprechend die Darstellung der bisherigen Lückenmarkierung 4 angepasst. Beispielhaft ist hier die Größe der bisherigen Lückenmarkierung 4 im Vergleich zu dem zweiten Zeitpunkt und im Vergleich zu der neuen Lückenmarkierung 6 reduziert.

Wenn im Verfahrensschritt S15 ermittelt wird, dass die neue Lücke, also das Regelziel erreicht ist, kann in einem Verfahrensschritt S16 die bisherige Lückenmarkierung 4, insbesondere graduell, vollständig ausgeblendet, also deaktiviert werden. Dabei kann dann die neue Lückenmarkierung 6 entsprechend prägnanter dargestellt werden, also insbesondere so wie die bisherige Lückenmarkierung 4 zu dem ersten Zeitpunkt in Fig. 2 angezeigt wurde.

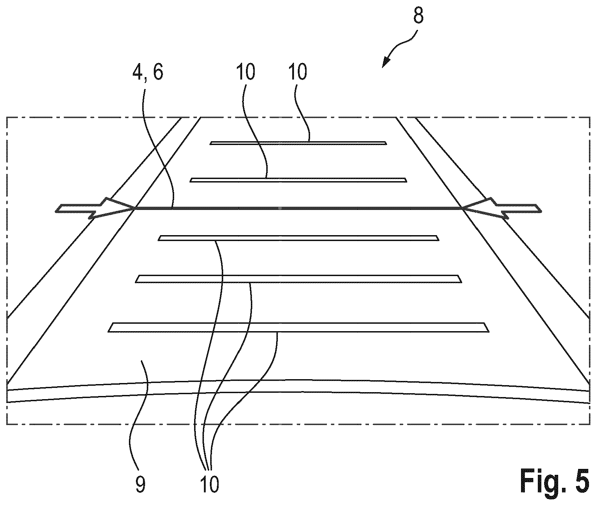

Sofern im Verfahrensschritt S4 kein Vorderfahrzeug 3 erkannt wurde, kann dementsprechend auch keine korrespondierende Vorderfahrzeugposition als Ausgangspunkt für das Bestimmen der Anzeigepositionen verwendet werden. Daher kann dann alternativ in einem Verfahrensschritt S17 zunächst die bisherige Lückenmarkierung 4 in einer alternativen Darstellung angezeigt oder repräsentiert werden. Eine solche Alternativdarstellung 8 ist beispielhaft und schematisch in Fig. 5 angedeutet. Dort ist ein Umfeldmodell 9, also beispielsweise eine schematische Darstellung oder Repräsentation der Umgebung, insbesondere der jeweils befahrenen, dem Kraftfahrzeug vorausliegenden Straße, dargestellt. Darin können zudem mehrere in der jeweiligen Situation einstellbare mögliche Lücken 10 dargestellt werden. Die bisherige Lückenmarkierung 4, welche die aktuell eingestellte Lücke anzeigt oder repräsentiert, kann dabei hervorgehoben sein, beispielsweise durch erhöhte Prägnanz oder zusätzliche Maskierungselemente, wie etwa Pfeile oder dergleichen.

Obwohl dies hier der Übersichtlichkeit halber nicht explizit dargestellt ist, können die in der jeweiligen Situation einstellbaren möglichen Lücken 10 grundsätzlich während des Verfahrens bestimmt und ebenso mittels des Head-up-Display, also in den in Fig. 2 bis 4 gezeigten Darstellungen angezeigt werden.

Sofern beispielsweise auch im Verfahrensschritt S9 kein Vorderfahrzeug 3 erkannt wurde, kann dann ebenfalls von dort aus zum Verfahrensschritt S17 gesprungen werden. Dabei kann dann die gemäß der jeweiligen Nutzereingabe eingestellte neue Lücke durch entsprechendes Darstellen oder Hervorheben als neue Lückenmarkierung 6 angezeigt werden.

Durch die hier vorgeschlagene Nutzung des jeweiligen Vorderfahrzeugs 3 als Anker kann auf eine entsprechend robuste Datenbasis zum Bestimmen der Anzeigepositionen auf oder in dem Head-up-Display für die Lückenmarkierungen 4, 6 zurückgegriffen werden, was zu einer entsprechend robusten und stabilen Anzeige dieser Lückenmarkierungen 4, 6 mittels des Head-up-Display führen kann. Ebenso können jeweils auch die übrigen wählbaren bzw. einstellbaren möglichen Lücken 10 zuverlässig angezeigt werden.

Insgesamt zeigen die beschriebenen Beispiele wie eine kontaktanaloge Anzeige zur Lückenverstellung im Kontext der Längsregelung eines Kraftfahrzeugs besonders vorteilhaft realisiert werden kann.

### Bezugszeichenliste

- 1: Ablaufplan
- 2: Fahrbahn
- 3: Vorderfahrzeug
- 4: bisherige Lückenmarkierung
- 5: Verstellmodusindikator
- 6: neue Lückenmarkierung
- 7: Veränderungsindikator
- 8: Alternativdarstellung
- 9: Umfeldmodell
- 10: mögliche Lücken
- S1 - S17: Verfahrensschritte

## Patentansprüche

1. Verfahren (1) für eine automatisierte Längsregelung eines Kraftfahrzeugs, in dem automatisch
- in dem Kraftfahrzeug fortlaufend eine Vorderfahrzeugposition eines diesem in Fahrtrichtung voraus fahrenden Vorderfahrzeugs (3) relativ zu dem Kraftfahrzeug ermittelt wird,
- ausgehend von dieser Vorderfahrzeugposition eine zu einer jeweils aktuell als Regelziel für die Längsregelung eingestellten Lücke zu dem Vorderfahrzeug (3) korrespondierende Anzeigeposition für eine zu dem Vorderfahrzeug (3) kontaktanaloge Lückenmarkierung (4) bestimmt wird und ein Head-Up-Display des Kraftfahrzeugs zum bezogen auf das Vorderfahrzeug (3) kontaktanalogen Anzeigen der Lückenmarkierung (4) an der ermittelten Anzeigeposition angesteuert wird,
- auf das Erfassen einer Nutzereingabe zum Einstellen einer veränderten neuen Lücke hin diese neue Lücke als Regelziel für die Längsregelung eingestellt wird und ausgehend von der Vorderfahrzeugposition und/oder der bisherigen Anzeigeposition eine gemäß der Nutzereingabe verschobene neue Anzeigeposition bestimmt wird,
**dadurch gekennzeichnet, dass**
- das Head-Up-Display angesteuert wird, um zusätzlich zu der an der bisherigen Anzeigeposition angezeigten bisherigen Lückenmarkierung (4) an der neuen Anzeigeposition eine neue Lückenmarkierung (6) kontaktanalog zu der bisherigen Lückenmarkierung (4) anzuzeigen, sodass die neue Lückenmarkierung (6) je nachdem, ob die neue Lücke kleiner oder größer als die bisherige Lücke ist, aus Sicht des Fahrers perspektivisch vor oder hinter der bisherigen Lückenmarkierung (4) erscheint, und
- wenn die Längsregelung die neue Lücke erreicht hat, das Head-Up-Display angesteuert wird, um dann an der ausgehend von der aktuellen Vorderfahrzeugposition bestimmten zu der neuen Lücke korrespondierenden Anzeigeposition nur noch die neue Lückenmarkierung (6) als einzige Lückenmarkierung (4, 6) und nicht mehr die bisherige Lückenmarkierung (4) anzuzeigen.

2. Assistenzsystem für ein Kraftfahrzeug, wobei das Assistenzsystem dazu eingerichtet ist, automatisch
- fortlaufend eine jeweils aktuelle relative Vorderfahrzeugposition eines in Fahrtrichtung voraus fahrenden Vorderfahrzeugs (3) zu ermitteln,
- ausgehend von dieser Vorderfahrzeugposition eine zu einer jeweils aktuell als Regelziel für eine automatisierte Längsregelung des Kraftfahrzeugs eingestellten Lücke zu dem Vorderfahrzeug (3) korrespondierende Anzeigeposition für eine zu dem Vorderfahrzeug (3) kontaktanaloge Lückenmarkierung (4) zu bestimmen und ein Head-Up-Display zum bezogen auf das Vorderfahrzeug (3) kontaktanalogen Anzeigen der Lückenmarkierung (4) an der ermittelten Anzeigeposition anzusteuern,
- auf das Erfassen einer Nutzereingabe zum Einstellen einer veränderten neuen Lücke hin ausgehend von der Vorderfahrzeugposition und/oder der bisherigen Anzeigeposition eine gemäß der Nutzereingabe verschobene neue Anzeigeposition zu bestimmen,
**dadurch gekennzeichnet, dass** das Assistenzsystem weiter eingerichtet ist
- das Head-Up-Display anzusteuern, um zusätzlich zu der an der bisherigen Anzeigeposition angezeigten bisherigen Lückenmarkierung (4) an der neuen Anzeigeposition eine neue Lückenmarkierung (6) kontaktanalog zu der bisherigen Lückenmarkierung (4) anzuzeigen, sodass die neue Lückenmarkierung (6) je nachdem, ob die neue Lücke kleiner oder größer als die bisherige Lücke ist, aus Sicht des Fahrers perspektivisch vor oder hinter der bisherigen Lückenmarkierung (4) erscheint, und
- wenn die Längsregelung die neue Lücke erreicht hat, das Head-Up-Display anzusteuern wird, um dann an der ausgehend von der aktuellen Vorderfahrzeugposition bestimmten zu der neuen Lücke korrespondierenden Anzeigeposition nur noch die neue Lückenmarkierung (6) als einzige Lückenmarkierung (4, 6) und nicht mehr die bisherige Lückenmarkierung (4) anzuzeigen.

3. Assistenzsystem nach Anspruch 2,
**dadurch gekennzeichnet, dass**
das Assistenzsystem dazu eingerichtet ist, dann, wenn bei aktiver Längsregelung keine Vorderfahrzeugposition ermittelt werden kann, das Head-Up-Display und/oder eine andere Anzeigeeinrichtung zum, insbesondere nicht kontaktanalogen, Anzeigen einer vorgegebenen graphischen Repräsentation (8) der jeweils eingestellten Lücke anzusteuern.

4. Assistenzsystem nach Anspruch 2 oder 3,
**dadurch gekennzeichnet, dass**
das Assistenzsystem dazu eingerichtet ist, das Head-Up-Display jeweils anzusteuern, um während der gleichzeitigen Darstellung der bisherigen Lückenmarkierung (4) und der neuen Lückenmarkierung (6) diese beiden Lückenmarkierungen (4, 6) mit unterschiedlicher Prägnanz anzuzeigen.

5. Assistenzsystem nach einem der Ansprüche 2 bis 4,
**dadurch gekennzeichnet, dass**
das Assistenzsystem dazu eingerichtet ist, das Head-Up-Display jeweils anzusteuern, um mit Erreichen der neuen Lücke durch die Längsregelung die bisherige Lückenmarkierung (4) graduell auszublenden.

6. Assistenzsystem nach einem der Ansprüche 2 bis 5,
**dadurch gekennzeichnet, dass**
das Assistenzsystem dazu eingerichtet ist, auf das Erfassen einer ersten Betätigung eines für das Einstellen der Lücke bestimmten Bedienelements hin zunächst ohne Änderung der Lücke in einen Verstellmodus zu wechseln und in dem Verstellmodus das Head-Up-Display zum Anzeigen eines vorgegebenen Indikators (5) für die Möglichkeit zum Verstellen der Lücke anzusteuern.

7. Assistenzsystem nach einem der Ansprüche 2 bis 6,
**dadurch gekennzeichnet, dass**
das Assistenzsystem dazu eingerichtet ist, alle jeweils möglichen Lücken (10) zu bestimmen und zur Auswahl bereitzustellen.

8. Assistenzsystem nach Anspruch 7,
**dadurch gekennzeichnet, dass**
das Assistenzsystem dazu eingerichtet ist, jeweils auf das Erfassen einer ersten Betätigung eines für das Einstellen der Lücke bestimmten Bedienelements hin das Head-Up-Display zum gleichzeitigen Anzeigen aller jeweils einstellbaren möglichen Lücken (10) anzusteuern.

9. Assistenzsystem nach Anspruch 7,
**dadurch gekennzeichnet, dass**
das Assistenzsystem dazu eingerichtet ist, das Head-Up-Display anzusteuern, um die jeweils einstellbaren möglichen Lücken (10) erst auf das Erfassen der Nutzereingabe zum Einstellen der veränderten neuen Lücke hin anzuzeigen.

10. Kraftfahrzeug, das zur automatisierten Längsregelung eingerichtet ist und ein Head-Up-Display aufweist sowie zum Ausführen eines Verfahrens (1) nach Anspruch 1 eingerichtet ist und/oder ein Assistenzsystem nach einem der Ansprüche 2 bis 9 aufweist.

## Claims

1. Method (1) for automated longitudinal control of a motor vehicle, in which method the following is carried out automatically:
- in the motor vehicle, a preceding vehicle position of a preceding vehicle (3) driving in front of the motor vehicle in the direction of driving is continuously ascertained relative to the motor vehicle,
- on the basis of this preceding vehicle position, a display position corresponding to a gap extending up to the preceding vehicle (3), said gap being currently set as the control target for the longitudinal control, is determined for a gap marking (4) that is contact-analogous to the preceding vehicle (3), and a head-up display of the motor vehicle is controlled to display, in a contact-analogous manner in relation to the preceding vehicle (3), the gap marking (4) at the ascertained display position,
- upon detecting a user input for setting a modified new gap, this new gap is set as the control target for the longitudinal control, and a new display position shifted according to the user input is determined on the basis of the preceding vehicle position and/or the previous display position,
**characterized in that**
- the head-up display is controlled in order to display, in a manner contact-analogous to the previous gap marking (4), a new gap marking (6) at the new display position in addition to the previous gap marking (4) displayed at the previous display position, with the result that the new gap marking (6) appears, from the driver's perspective, in front of or behind the previous gap marking (4) depending on whether the new gap is smaller or larger than the previous gap, and
- when the longitudinal control has reached the new gap, the head-up display is controlled in order to then display as the only gap marking (4, 6) solely the new gap marking (6), and no longer the previous gap marking (4), at the display position determined on the basis of the current preceding vehicle position and corresponding to the new gap.

2. Assistance system for a motor vehicle, the assistance system being designed to carry out the following automatically:
- continuously ascertaining a current relative preceding vehicle position of a preceding vehicle (3) driving in front in the direction of driving,
- on the basis of this preceding vehicle position, determining, for a gap marking (4) that is contact-analogous to the preceding vehicle (3), a display position corresponding to a gap extending up to the preceding vehicle (3), said gap being currently set as the control target for automated longitudinal control of the motor vehicle, and controlling a head-up display to display, in a contact-analogous manner in relation to the preceding vehicle (3), the gap marking (4) at the ascertained display position,
- upon detecting a user input for setting a modified new gap, determining, on the basis of the preceding vehicle position and/or the previous display position, a new display position shifted according to the user input,
**characterized in that** the assistance system is further designed
- to control the head-up display in order to display, in a manner contact-analogous to the previous gap marking (4), a new gap marking (6) at the new display position in addition to the previous gap marking (4) displayed at the previous display position, with the result that the new gap marking (6) appears, from the driver's perspective, in front of or behind the previous gap marking (4) depending on whether the new gap is smaller or larger than the previous gap, and
- when the longitudinal control has reached the new gap, to control the head-up display in order to then display as the only gap marking (4, 6) solely the new gap marking (6), and no longer the previous gap marking (4), at the display position determined on the basis of the current preceding vehicle position and corresponding to the new gap.

3. Assistance system according to claim 2,
**characterized in that**
the assistance system is designed to control the head-up display and/or another display device, when no preceding vehicle position can be ascertained during active longitudinal control, to display, in particular in a non-contact-analogous manner, a predefined graphic representation (8) of the relevant set gap.

4. Assistance system according to claim 2 or 3,
**characterized in that**
the assistance system is designed to control the head-up display in order to display, while simultaneously depicting the previous gap marking (4) and the new gap marking (6), these two gap markings (4, 6) with a different prominence in each case.

5. Assistance system according to any of claims 2 to 4,
**characterized in that**
the assistance system is designed to control the head-up display in order to gradually fade the previous gap marking (4) out as the new gap is reached by the longitudinal control.

6. Assistance system according to any of claims 2 to 5,
**characterized in that**
the assistance system is designed to switch, initially without changing the gap, to an adjustment mode upon detecting a first actuation of an operating element intended for setting the gap, and in the adjustment mode to control the head-up display to display a predefined indicator (5) for the possibility of adjusting the gap.

7. Assistance system according to any of claims 2 to 6,
**characterized in that**
the assistance system is designed to determine all possible gaps (10) and make them available for selection.

8. Assistance system according to claim 7,
**characterized in that**
the assistance system is designed to control the head-up display to simultaneously display all settable possible gaps (10) upon detecting a first actuation of an operating element intended for setting the gap.

9. Assistance system according to claim 7,
**characterized in that**
the assistance system is designed to control the head-up display in order to display the settable possible gaps (10) only upon detecting the user input for setting the modified new gap.

10. Motor vehicle designed for automated longitudinal control and having a head-up display, and being designed to carry out a method (1) according to claim 1 and/or having an assistance system according to any of claims 2 to 9.

## Revendications

1. Procédé (1) pour une régulation longitudinale automatisée d'un véhicule automobile, dans lequel automatiquement
- dans le véhicule automobile, une position de véhicule précédent d'un véhicule précédent (3) se déplaçant devant celui-ci dans le sens de la marche est déterminée en continu par rapport au véhicule automobile,
- à partir de cette position de véhicule précédent, une position d'affichage correspondant à un écart actuellement réglé respectivement comme objectif de régulation pour la régulation longitudinale par rapport au véhicule précédent (3) est établie pour un marquage d'écart (4) analogue au contact par rapport au véhicule précédent (3) et un affichage tête haute du véhicule automobile est commandé pour afficher le marquage d'écart (4) analogue au contact par rapport au véhicule précédent (3) à la position d'affichage déterminée,
- en réponse à la détection d'une entrée d'utilisateur pour régler un nouvel écart modifié, ce nouvel écart est réglé en tant qu'objectif de régulation pour la régulation longitudinale et, à partir de la position de véhicule précédent et/ou de l'ancienne position d'affichage, une nouvelle position d'affichage décalée selon l'entrée d'utilisateur est établie,
**caractérisé en ce que**
- l'affichage tête haute est commandé pour afficher, en plus de l'ancien marquage d'écart (4) affiché à l'ancienne position d'affichage, un nouveau marquage d'écart (6) à la nouvelle position d'affichage, de manière analogue au contact par rapport à l'ancien marquage d'écart (4), de sorte que le nouveau marquage d'écart (6) apparaît en perspective devant ou derrière l'ancien marquage d'écart (4), selon que le nouvel écart est plus petit ou plus grand que l'ancien écart, du point de vue du conducteur, et
- lorsque la régulation longitudinale a atteint le nouvel écart, l'affichage tête haute est commandé pour afficher alors, à la position d'affichage déterminée à partir de la position de véhicule précédent actuelle et correspondant au nouvel écart, uniquement le nouveau marquage d'écart (6) en tant que seul marquage d'écart (4, 6) et non plus l'ancien marquage d'écart (4).

2. Système d'assistance pour un véhicule automobile, dans lequel le système d'assistance est conçu pour, automatiquement
- déterminer en continu une position de véhicule précédent relative actuelle respective d'un véhicule précédent (3) se déplaçant dans le sens de la marche,
- à partir de cette position de véhicule précédent, établir une position d'affichage correspondant à un écart par rapport au véhicule précédent (3) respectivement actuellement réglé comme objectif de régulation pour une régulation longitudinale automatisée du véhicule automobile, pour un marquage d'écart (4) analogue au contact par rapport au véhicule précédent (3), et commander un affichage tête haute pour l'affichage analogue au contact du marquage d'écart (4) par rapport au véhicule précédent (3), à la position d'affichage déterminée,
- en réponse à la détection d'une entrée d'utilisateur pour régler un nouvel écart modifié, établir une nouvelle position d'affichage déplacée selon l'entrée d'utilisateur à partir de la position de véhicule précédent et/ou de l'ancienne position d'affichage,
**caractérisé en ce que** le système d'assistance est en outre conçu pour
- commander l'affichage tête haute pour afficher, en plus de l'ancien marquage d'écart (4) affiché à l'ancienne position d'affichage, un nouveau marquage d'écart (6) à la nouvelle position d'affichage, de manière analogue au contact par rapport à l'ancien marquage d'écart (4), de sorte que le nouveau marquage d'écart (6) apparaît en perspective devant ou derrière l'ancien marquage d'écart (4), selon que le nouvel écart est plus petit ou plus grand que l'ancien écart, du point de vue du conducteur, et
- lorsque la régulation longitudinale a atteint le nouvel écart, commander l'affichage tête haute pour afficher alors, à la position d'affichage déterminée à partir de la position de véhicule précédent actuelle et correspondant au nouvel écart, uniquement le nouveau marquage d'écart (6) en tant que seul marquage d'écart (4, 6) et non plus l'ancien marquage d'écart (4).

3. Système d'assistance selon la revendication 2,
**caractérisé en ce que**
le système d'assistance est conçu pour commander l'affichage tête haute et/ou un autre dispositif d'affichage pour afficher, en particulier de manière non analogue au contact, une représentation graphique (8) prédéfinie de l'écart respectivement réglé, lorsqu'aucune position de véhicule précédent ne peut être déterminée en cas de régulation longitudinale active.

4. Système d'assistance selon la revendication 2 ou 3,
**caractérisé en ce que**
le système d'assistance est conçu pour commander l'affichage tête haute respectivement pour afficher ces deux marquages d'écart (4, 6) avec une prégnance différente pendant l'illustration simultanée de l'ancien marquage d'écart (4) et du nouveau marquage d'écart (6).

5. Système d'assistance selon l'une des revendications 2 à 4,
**caractérisé en ce que**
le système d'assistance est conçu pour commander l'affichage tête haute respectivement pour occulter progressivement l'ancien marquage d'écart (4) lorsque le nouvel écart est atteint par la régulation longitudinale.

6. Système d'assistance selon l'une des revendications 2 à 5,
**caractérisé en ce que**
le système d'assistance est conçu pour, en réponse à la détection d'un premier actionnement d'un élément de pilotage destiné au réglage de l'écart, passer tout d'abord sans modification de l'écart dans un mode de réglage et, dans le mode de réglage, commander l'affichage tête haute pour afficher un indicateur (5) prédéfini de la possibilité de réglage de l'écart.

7. Système d'assistance selon l'une des revendications 2 à 6,
**caractérisé en ce que**
le système d'assistance est conçu pour déterminer tous les écarts (10) respectivement possibles et les mettre à disposition pour sélection.

8. Système d'assistance selon la revendication 7,
**caractérisé en ce que**
le système d'assistance est conçu pour commander l'affichage tête haute pour l'affichage simultané de tous les écarts (10) possibles réglables respectivement en réponse à la détection d'un premier actionnement d'un élément de pilotage destiné au réglage de l'écart.

9. Système d'assistance selon la revendication 7,
**caractérisé en ce que**
le système d'assistance est conçu pour commander l'affichage tête haute afin de n'afficher les écarts (10) possibles réglables respectivement qu'en réponse à la détection de l'entrée d'utilisateur pour régler le nouvel écart modifié.

10. Véhicule automobile, qui est conçu pour la régulation longitudinale automatisée et qui présente un affichage tête haute et qui est conçu pour exécuter un procédé (1) selon la revendication 1 et/ou qui présente un système d'assistance selon l'une des revendications 2 à 9.
